# EUROPÄISCHE PATENTSCHRIFT

(11) **EP 1 901 031 B1**
(45) Veröffentlichungstag und Bekanntmachung des Hinweises auf die Patenterteilung: **01.05.2013**
(21) Anmeldenummer: 07017870.2
(22) Anmeldetag: 12.09.2007
(51) Int. Cl.: G01B 11/24, G01B 11/25

(54) **Messanordnung und Verfahren zum Vermessen einer dreidimensional ausgedehnten Struktur**
Measuring assembly and method for measuring a three-dimensionally extended structure
Agencement de mesure et procédé de mesure d'une structure étirée de manière tridimensionnelle

(30) Priorität: 13.09.2006 DE 102006043741; 09.02.2007 DE 102007007194
(43) Veröffentlichungstag der Anmeldung: 19.03.2008
(73) Patentinhaber: Micro-Epsilon Optronic GmbH, 01465 Dresden-Langebrück (DE)
(72) Erfinder: Stautmeister, Torsten, Dipl.-Ing., 01109 Dresden (DE); Schüller, Tobias, Dr.-Ing., 01109 Dresden (DE)
(74) Vertreter: Ullrich & Naumann

(56) Entgegenhaltungen:
- WO-A2-03/032252
- DE-A1- 10 335 685
- GB-A- 2 264 602
- GB-A- 2 325 300

## Beschreibung

Die Erfindung betrifft eine Messanordnung zum Vermessen einer dreidimensional ausgedehnten Struktur mittels eines optischen Sensors, wobei der Sensor einen sich quer zur optischen Achse erstreckenden Messbereich ausweist. Die Erfindung betrifft ferner ein entsprechendes Verfahren.

Insbesondere in der Qualitätssicherung nimmt die Vermessung von dreidimensional ausgedehnten Strukturen eine wichtige Rolle ein. Eine derartige Struktur kann beispielsweise ein Spalt, der Verlauf einer Oberfläche bei aneinander stoßenden Teilen eines Gegenstands, eine Scheißnaht oder Kleberaupe umfassen. In der Automobilindustrie besteht beispielsweise die Notwendigkeit, einen Türspalt an einem Fahrzeug hinsichtlich eines gleichmäßigen Verlaufs zu untersuchen. Auch Schweißnähte oder auf ein Werkstück aufgebrachte Kleberaupen müssen hinsichtlich ihrer Qualität und Gleichmäßigkeit überprüft werden. Bei aneinander stoßenden Flächen ist beispielsweise von Interesse, ob die Flächen bündig aufeinander treffen.

Bei aus der Praxis bekannten Verfahren werden häufig Linientriangulatoren eingesetzt, mit denen die dreidimensional ausgedehnte Struktur erfasst wird. Bei einem Linientriangulator wird eine möglichst schmale und helle Linie, häufig mittels eines Laserstrahls, auf die zu untersuchende Struktur projiziert und das von der Oberfläche reflektierte Licht durch ein Detektorarray detektiert. Aus der Verschiebung der Linie in dem Detektorbild kann auf die dreidimensionale Beschaffenheit der untersuchten Struktur geschlossen werden. Linientriangulatoren weisen den Nachteil auf, dass sie Messergebnisse mit vergleichsweise geringer Präzision liefern und einzelne, beispielsweise sehr steile Nähte oder Kleberaupen nicht oder lediglich sehr schlecht detektierbar sind.

Zur Erhöhung der Präzision und der Qualität der gewonnenen Informationen werden Sensorsysteme eingesetzt, die einen Bereich der dreidimensional ausgedehnten Struktur aus unterschiedlichen Richtungen beleuchten bzw. vermessen. Die derart gewonnenen Informationen werden dann zu einem Gesamtbild der Struktur zusammengefügt. Dadurch werden einzelne Details erst sichtbar. So kann beispielsweise ein Spalt oder eine sehr steile Naht erst gut durch schräge Beleuchtung und/oder Erfassung vermessen werden. Problematisch an derartigen Verfahren ist, dass statt eines einzelnen Sensors zwei Sensoren notwendig sind. Da die in diesem Zusammenhang eingesetzten Sensoren meist vergleichsweise teuer sind, ergeben sich erhebliche zusätzliche Kosten für die Sensoranordnung. Zudem muss für jeden Sensor geeignete Hardware zum Ansteuern des Sensors und zur Nachbearbeitung der Sensorsignale einschließlich meist notwendiger Analog-/Digitalwandler zur Verfügung stehen. Dies führt zu einer weiteren Erhöhung der Kosten.

Eine Möglichkeit zur Vermeidung der Verwendung eines weiteren Sensors bestünde darin, eine dreidimensional ausgedehnte Struktur zuerst aus einer ersten Richtung zu vermessen, den Sensor dann in eine zweite Position zu verschwenken und von dieser Position aus die Struktur erneut aus einer anderen Richtung zu vermessen. Diese Art der Erfassung weist den entscheidenden Nachteil auf, dass sie erheblich langsamer ist als die Erfassung mit zwei Sensoren gleichzeitig. Zudem muss eine Verschwenkung des Sensors vorgenommen werden, wobei beide Messpositionen eindeutig definiert und bekannt sein müssen.

Es ist aus dem Stand der Technik bekannt, ein Werkstück aus verschiedenen Richtungen mit nur einer Kamera aufzunehmen. Die Patentschrift GB 2 264 602 A zeigt dies bei einem Scanner zur dreidimensionales Werkstückvermessung, wobei eine projizierte Lichtlinie aus zwei verschiedenen Winkeln über ein Spiegelsystem mit einer einzigen Kamera aufgenommen wird. Ähnliche Spiegelsysteme zur Aufnahme eines Messobjekts aus unterschiedlichen Richtungen zeigen die Schriften WO 03/032252 A2, DE 103 35 685 A1, sowie GB 2 325 300 A.

Der vorliegenden Erfindung liegt daher die Aufgabe zugrunde, eine Messanordnung und ein Verfahren der eingangs genannten Art derart auszugestalten und weiterzubilden, dass eine präzise und vergleichsweise schnelle Vermessung einer dreidimensional ausgedehnten Struktur bei einfachem Aufbau der Messanordnung und geringen Kosten erreichbar ist.

Erfindungsgemäß wird die voranstehende Aufgabe durch die Merkmale des Patentanspruchs 1 gelöst. Danach ist die in Rede stehende Messanordnung dadurch gekennzeichnet, dass die Messanordnung eine Spiegelanordnung mit mehreren Spiegeln umfasst, die den Messbereich des Sensors zunächst über einen oder mehrere Spiegel in mindestens zwei divergierende Bereiche aufteilt und die die divergierenden Bereiche über einen oder mehrere weitere Spiegel wieder derart zusammenführt, dass sich die Bereiche in einem Messfeld schneiden, wobei in dem Messfeld eine Vermessung der dreidimensional ausgedehnten Struktur aus verschiedenen Richtungen erfolgt. Weiterhin umfasst die Messanordnung eine Beleuchtungseinrichtung, wobei die Lichtstrahlen vom Sensor zur Struktur und von der Struktur zurück zum Sensor durch eine gemeinsame Spiegelanordnung gelenkt werden.

In verfahrensmäßiger Hinsicht ist die voranstehende Aufgabe durch die Merkmale des Patentanspruchs 8 gelöst. Danach ist das in Rede stehende Verfahren derart weitergebildet, dass mittels eines oder mehrerer Spiegel einer Spiegelanordnung der Messbereich des Sensors zunächst in mindestens zwei divergierende Bereiche aufgeteilt wird und die divergierenden Bereiche über einen oder mehrere weitere Spiegel der Spiegelanordnung wieder derart zusammengeführt werden, dass sich die Bereiche in einem Messfeld schneiden, wodurch in dem Messfeld eine Vermessung der dreidimensional ausgedehnten Struktur aus verschiedenen Richtungen ermöglicht wird. Weiterhin umfasst die Messanordnung eine Beleuchtungseinrichtung, wobei die Lichtstrahlen vom Sensor zur Struktur und von der Struktur zurück zum Sensor durch eine gemeinsame Spiegelanordnung gelenkt werden.

In erfindungsgemäßer Weise ist zunächst erkannt worden, dass auf die Vorzüge der Vermessung der dreidimensional ausgedehnten Struktur aus verschiedenen Richtungen nicht zwangsläufig verzichtet werden muss, wenn der Einsatz von zwei Sensoren beispielsweise aus Kostengründen unerwünscht ist. Stattdessen kann erfindungsgemäß der gleiche Effekt erzielt werden, wenn dem Sensor eine geeignete Spiegelanordnung mit mehreren Spiegeln nachgeschaltet ist. Dazu wird mindestens ein Spiegel in den Strahlengang des Sensors eingebracht, der den Messbereich des Sensors über einen oder mehrere Spiegel in mindestens zwei divergierende Bereiche aufteilt. Dadurch wird erreicht, dass die Bereiche von der optischen Achse des Sensors weg nach außen gelenkt werden. In diese divergierenden Bereiche werden ein oder mehrere weitere Spiegel angeordnet, die den Messbereich des Sensors wieder zurück in Richtung optischer Achse des Sensors reflektiert. Die Spiegel sind derart angeordnet, dass sich die Bereiche in einem Messfeld schneiden. Wird die dreidimensional ausgedehnte Struktur in das Messfeld gebracht bzw. die Messanordnung derart bewegt, dass sich die dreidimensional ausgedehnte Struktur in dem Messfeld befindet, so kann mit der erfindungsgemäßen Anordnung die Struktur gleichzeitig aus verschiedenen Richtungen vermessen werden. Allerdings ist zu deren Vermessung lediglich ein Sensor notwendig, wodurch die Kosten und Baugröße der Messanordnung erheblich reduziert werden. Gleichzeitig nimmt die Zahl der lösbaren Messaufgaben zu. Durch den Einsatz der Spiegelanordnung steht zwar quer zu der optischen Achse des Sensors lediglich ein Teil des Messbereichs zur tatsächlichen Vermessung zur Verfügung, dies stellt jedoch in der Praxis häufig keine große Einschränkung dar. In vielen Fällen sind die zu vermessenden Strukturen vergleichsweise schmal und können mit dem reduzierten Messbereich im Allgemeinen problemlos erfasst werden.

Im Allgemeinen werden die Spiegel der Spiegelanordnung derart angeordnet sein, dass sich Strahlen vom Sensor zur untersuchten Struktur und von der Struktur zurück zum Sensor jeweils in einer Ebene befinden. Dies muss jedoch nicht notwendigerweise gegeben sein. Die Spiegel können auch - beispielsweise zum Erreichen einer bestimmten Gehäuseform - derart angeordnet sein, dass lediglich einzelne Strahlen in der gleichen Ebene verlaufen. Durch bestimmte Anordnung der Spiegel kann auch erreicht werden, dass sich die auf die dreidimensional ausgedehnte Struktur gelenkten Teile des Messbereichs nicht direkt schneiden, sondern geringfügig versetzt sind. Dies wird dann zu sehr guten Ergebnissen führen, wenn beispielsweise die Messanordnung längs der dreidimensional ausgedehnten Struktur oder umgekehrt bewegt wird. Dann wird die Struktur von den einzelnen Teilen des Messbereichs zeitversetzt erfasst. Dies kann in einer Signalverarbeitung entsprechend kompensiert werden.

Vorzugsweise sind die Spiegel der Spiegelanordnung, die den Messbereich in divergierende Bereiche aufteilen, derart angebracht, dass zwei divergierende Bereiche entstehen. Dies stellt im Allgemeinen einen guten Kompromiss zwischen der Vermessbarkeit der Struktur aus verschiedenen Richtungen und einem möglichst großen Messfeld dar. Allerdings sind auch Anwendungen denkbar, in denen die Ausgestaltung von mehr als zwei divergierenden Bereichen sinnvoll und erwünscht ist. Dabei können die Trennlinien zwischen den Bereichen relativ beliebig verlaufen. Die Trennlinien könnten parallel zueinander verlaufen, sie könnten sich aber auch beliebig schneiden oder in sonstiger Art und Weise zueinander angeordnet sein. Auch müssen die Trennlinien nicht zwangsläufig Geraden sein. Eine beispielsweise kreisbogenförmige Ausgestaltung ist ebenso denkbar. Die Lage und Ausgestaltung der Linien wird von dem verwendeten Sensor und dem jeweiligen Anwendungsfall abhängen.

Zum Erreichen eines gleich großen Messbereichs bzw. einer gleichen Auflösung in den divergierenden Bereichen sind die Spiegel vorzugsweise derart angeordnet, dass sich gleich große Bereiche ausbilden. Allerdings sind auch hier Anwendungsfälle denkbar, bei denen unterschiedlich große Bereiche sinnvoll sind. So könnten beispielsweise Strukturen untersucht werden, von denen bekannt ist, dass interessante Bereiche von einer Richtung besonders gut beobachtbar sind. In diesem Fall könnte diese Richtung einen größeren Messbereich erhalten als eine andere Richtung.

Vorzugsweise handelt es sich bei dem eingesetzten Sensor um einen Abstandssensor, der nach dem Lichtschnittverfahren arbeitet. Dieser kann zur Erfassung von zwei- oder dreidimensionalen Daten ausgebildet sein. Dabei sind prinzipiell die verschiedensten aus der Praxis bekannten Abstandssensoren einsetzbar. Vorzugsweise wird ein Linientriangulator eingesetzt. Allerdings können auch andere Abstandssensoren eingesetzt werden, wovon konfokal oder konfokal-chromatisch messende Systeme oder Autofokussysteme lediglich drei mögliche Sensortechnologien darstellen. Die Vermessung der dreidimensional ausgedehnten Struktur kann sowohl punktweise als auch entlang einer relativ beliebig gearteten Linie oder Fläche erfolgen. Gleichzeitig kann eine Vermessung mit oder ohne Verschiebung des Sensors bzw. der dreidimensional ausgedehnten Struktur relativ zueinander durchgeführt werden.

Durch eine definierte Anordnung der Spiegelanordnung lässt sich ein weiterer Effekt nutzen. Da die Richtungen, aus denen der Sensor bzw. ein Teil des Messbereichs des Sensors die dreidimensional ausgedehnte Struktur vermisst, recht genau bekannt sind, kann dieses Wissen für eine Triangulation genutzt werden. Bei einer Triangulation wird ein Punkt von zwei verschiedenen Positionen aus betrachtet. Aus dem Abstand der beiden Positionen und den Winkeln, unter denen der Punkt bezogen auf die Verbindungslinie der beiden Positionen jeweils von den beiden Positionen aus gesehen wird, kann die Entfernung des Punkts von den beiden Positionen berechnet werden. Dadurch können Entfernungsinformationen über die Struktur gewonnen werden. Diese Triangulation könnte auch bei der Verwendung eines Abstandssensors verwendet werden. Dadurch wird zum einen durch die Erfassung der Struktur aus verschiedenen Richtungen die Messgenauigkeit erhöht, zum anderen entstehen durch die Triangulation weitere Informationen, die zu einer Erhöhung der Messgenauigkeit beitragen können.

Der Sensor weist einen optoelektrischen Detektor auf, der als Zeilendetektor oder Matrixdetektor ausgebildet sein kann. Der Detektor kann als einfache Fotodiodenzeile ausgebildet sein, könnte jedoch auch eine CCD- oder CMOS-Kamera umfassen. Prinzipiell sind sämtliche aus der Praxis bekannten optoelektrischen Detektoren einsetzbar.

Dem Sensor könnte eine geeignete Optik zugeordnet sein, durch die der Messbereich längs der optischen Achse des Sensors erhöht bzw. der Schärfentiefebereich vergrößert wird. Vorzugsweise kommt hierzu eine telezentrische Optik zum Einsatz. Dies ist beispielsweise dann von Interesse, wenn der Sensor durch eine CCD- oder CMOS-Kamera gebildet ist.

Vorzugsweise ist eine Beleuchtungseinrichtung vorhanden, die die zu erfassende Struktur beleuchtet. Die Beleuchtungseinrichtung kann durch die verschiedensten aus der Praxis bekannten Lichtquellen realisiert sein. Lediglich beispielhaft sei auf die Verwendung eines Laserlinienprojektors, eines Punktlasers, einer Halogen- oder Xenonlampe oder von LEDs verwiesen. Im Allgemeinen wird die Beleuchtungsquelle in Abhängigkeit von dem verwendeten Messverfahren ausgewählt werden. Bei einem Linientriangulator umfasst die Beleuchtungseinrichtung beispielsweise einen Linienlaserprojektor und ist integraler Bestandteil des Sensorsystems.

Der Sensor könnte bereits von sich aus einen ausreichend sich quer zu seiner optischen Achse erstreckenden Messbereich aufweisen. Allerdings könnte diese Ausdehnung des Messbereichs auch durch geeignete Maßnahmen erreicht oder vergrößert werden. Beispielhaft sei auf die Verwendung von Linsen, Linsensystemen oder einer Umlenkvorrichtung, die beispielsweise einen die Struktur abtastenden Laserlichtstrahl über die Oberfläche der zu erfassenden Struktur führt, verwiesen. Andererseits könnte die Ausdehnung des Messbereichs auch durch Bewegung des Sensors quer zu dessen optischer Achse erzielt werden. In diesem Fall würde die Spiegelanordnung im Wesentlichen ortsfest bleiben.

Die eingesetzten Spiegel könnten verschiedenste geometrische Ausgestaltungen aufweisen. In der einfachsten Ausführungsform sind die Oberflächen der Spiegel plan. Dadurch entstehen besonders einfache Verhältnisse bei der Vermessung der Struktur. Allerdings könnten die Spiegel auch gewölbt sein. Sie könnten beispielsweise aus Ausschnitten aus Kegeln, Kugeln, Ellipsoiden, Hyperboloiden oder dergleichen bestehen. Die Wahl einer geeigneten Spiegeloberfläche wird im Allgemeinen von der Anwendungssituation abhängen und kann auf die jeweils zu vermessende Struktur abgestimmt sein. Dabei ist es auch möglich, dass die einzelnen Spiegel der Spiegelanordnung verschieden ausgestaltet sind. So könnte beispielsweise der erste Spiegel der Spiegelanordnung plan ausgebildet sein, während einer der zweiten Spiegel einen Ausschnitt aus einer Kugel umfasst, um diesen Teil des Messbereichs auf die dreidimensionale Struktur zu fokussieren oder aber den Messbereich weiter aufzuweiten.

Die Spiegel könnten ebenso durch die verschiedensten Materialien oder Materialkombinationen gebildet sein. Voraussetzung ist lediglich, dass die Materialien über eine ausreichend reflektierende Oberfläche verfügen. Es können metallisierte Glasflächen ebenso Verwendung finden wie hochfein polierte Metalloberflächen. Auch hier ist eine Reihe von Ausgestaltungen in der Praxis bekannt.

Zum Erzielen einer möglichst flexiblen Messanordnung könnten die Spiegel bewegbar ausgestaltet sein. Diese Bewegung könnte translatorisch, rotatorisch oder als eine Kombination von beidem erfolgen. Die Achsen der Bewegung bzw. Drehung ist relativ beliebig und wird wieder von der Anwendungssituation abhängen. Durch die Bewegbarkeit der Spiegel kann die Messanordnung an das jeweils zu erfassende Objekt angepasst werden. Die Anpassung könnte auch während des Messvorgangs erfolgen. Die Bewegung der Spiegel ließe sich manuell oder automatisch durchführen. Bei einer automatischen Verstellung der Spiegel könnte die Bewegung durch ein Steuergerät gesteuert oder geregelt werden, um eine besser nachzuvollziehende Veränderung der Spiegellage und -position zu erzielen.

Es sind Messsituationen denkbar, bei denen das Messfeld nur einen Teil der zu vermessenden Struktur abdeckt. Für einen solchen Fall könnten die Messanordnung und die zu vermessende Struktur relativ zueinander verschiebbar ausgestaltet sein. Es ist dabei prinzipiell unbedeutend, ob eine Verschiebung der Messanordnung oder des Objekts vorgenommen wird. Es wäre auch eine gleichzeitige Bewegung der Messanordnung und der Struktur denkbar, wobei eine Relativbewegung erhalten bleiben sollte. Die Richtung der Bewegung ist prinzipiell unerheblich. Allerdings wird die Bewegung im Allgemeinen entlang einer Längsausdehnung der dreidimensional ausgedehnten Struktur erfolgen.

Zudem wäre es denkbar, dass die Messanordnung an einen Roboterarm angebracht ist und im Bedarfsfall in Richtung der zu vermessenden Struktur geschwenkt wird.

Die durch den Sensor gewonnenen Bildinformationen werden durch den erfindungsgemäßen Einsatz einer Spiegelanordnung Anteile enthalten, die von der Vermessung der Struktur aus mindestens zwei verschiedenen Richtungen herrühren. Diese Anteile in dem durch den Sensor gewonnenen Bild müssen auf geeignete Art und Weise getrennt werden. Hier könnte eine relativ einfache Suche nach einem charakteristischen Merkmal angestellt werden. So wird sich beispielsweise die Stelle der Spiegelanordnung, an der die zu den divergierenden Bereichen führenden Spiegelflächen zusammentreffen, charakteristisch in dem Bild abzeichnen. Dies könnte sich beispielsweise in einem besonders hellen Punkt, einem besonders kurzen Abstand oder dergleichen ausdrücken.

Zur Trennung der Bereiche könnten auch Informationen über die Spiegelanordnung selbst genutzt werden. In vielen Fällen wird sich die Spiegelanordnung in einem festen oder zumindest definierten Zustand befinden. Hier ist eine Trennung der einzelnen Bereiche ohne größere Berechnungen möglich. Vielmehr könnten die Trennlinien manuell oder automatisch bestimmt werden. Danach bleiben die Trennungen konstant oder werden definiert mit den Spiegeln nachgeführt.

Ebenso könnten die Trennlinien durch eine Kombination der genannten Verfahren bestimmt werden. Eine erste Grobeinteilung könnte beispielsweise mit Hilfe der geometrischen Gegebenheiten vorgenommen werden, während eine Feinabstimmung danach anhand der Bildinformationen mittels Erkennungsverfahren durchgeführt werden könnte.

Darüber hinaus lassen sich die Trennlinien auf den verschiedensten weiteren Wegen bestimmen. Lediglich beispielhaft sei auf den Einsatz von Korrelationstechniken verwiesen.

Jeder der in den Bildinformationen aufgefundenen Bereiche, die die Vermessung der dreidimensional ausgedehnten Struktur aus einer anderen Richtung repräsentieren, liefert Informationen über die Beschaffenheit der Struktur. Diese einzelnen Anteile könnten zunächst aufbereitet werden. So könnten beispielsweise durch die Spiegelanordnung erzeugte Verzerrungen oder Bildrauschen geeignet kompensiert werden. Danach könnten die einzelnen Bildinformationen zu einer gemeinsamen Information über die dreidimensional ausgedehnte Struktur zusammengeführt werden. Dies könnte beispielsweise bei einem Abstandssensor derart erfolgen, dass die aus verschiedenen Richtungen gewonnenen Abstandsinformationen zu einem gemeinsamen Profil der dreidimensional ausgedehnten Struktur zusammengefasst werden. Entsprechende Verfahren sind aus der Praxis hinlänglich bekannt. Zusätzlich oder alternativ könnten weitere Informationen aus den Teilbildern gewonnen werden. So kann beispielsweise ein Spalt- oder Bündigkeitsmaß bestimmt und mit einem Sollwert verglichen werden. Dem Nutzer könnten dann einfache binäre Werte ausgegeben werden, ob das gewünschte Maß erreicht wird oder nicht. Zudem könnten einzelne Abmessungen der Struktur angegeben werden. Bei einer Kleberaupe könnten beispielsweise die Breite und das Volumen des aufgetragenen Klebstoffs von Interesse sein. Dadurch werden beispielsweise Aussagen ermöglicht, ob ausreichend Klebstoff für eine bestimmte Aufgabe vorhanden ist. Die Ergebnisse der Vermessung und Analyse können dem Nutzer schließlich über ein digitales und/oder ein analoges Anzeigegerät angezeigt werden.

Vor einer Verarbeitung müssen die Signale des Sensors gegebenenfalls durch eine Analog-/Digital-Wandlung digitalisiert werden. Hierzu sind aus der Praxis verschiedenste Verfahren bekannt. Die Signalverarbeitung selbst könnte in geeigneten Digitalrechnern vorgenommen werden. Dazu stehen sehr viele aus der Praxis bekannten Rechner zur Verfügung. Lediglich beispielhaft sei auf den Einsatz von DSPs (Digitale Signalprozessor), Mikrocontroller, CPLDs (Complex Programmable Logic Device), FPGAs (Field Programmable Gate Array), ASICs (Application Specific Integrated Circuit) oder Kombinationen dieser Technologien hingewiesen. Allerdings könnte eine Signalverarbeitung auch auf einem PC mit eventuell zusätzlicher Hardware oder einer SPS-Steuerung durchgeführt werden.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 16 jeweils nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigt die einzige
- Fig.: eine erfindungsgemäße Messanordnung zum Vermessen einer dreidimensional ausgedehnten Struktur.

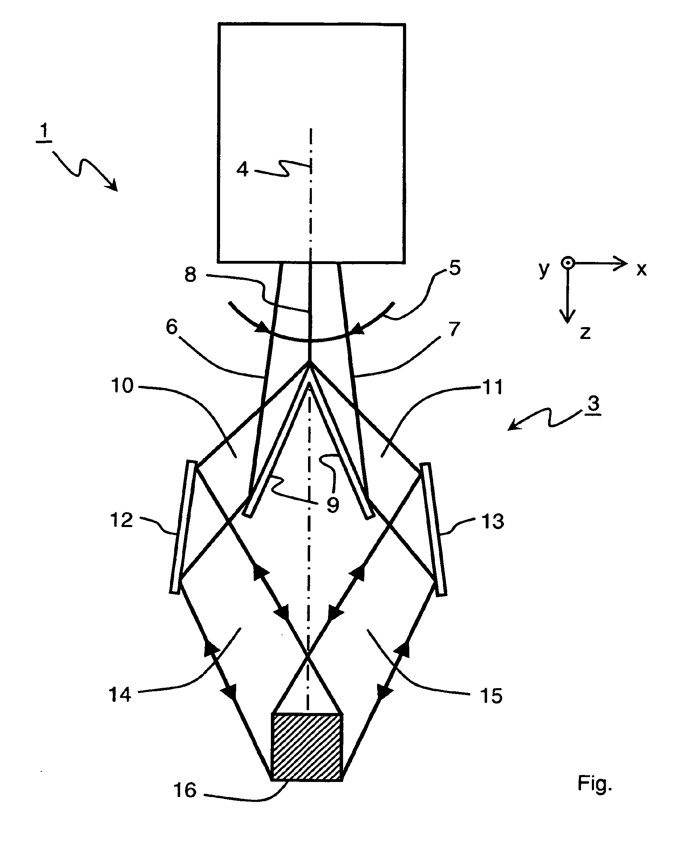

Die einzige Fig. stellt eine erfindungsgemäße Messanordnung 1 mit einem Sensor 2 und einer Spiegelanordnung 3 dar. Als Sensor 2 kommt ein Linientriangulationsscanner zum Einsatz, bei dem ein Linienlaserprojektor eine Linie auf das zu vermessende Objekt projiziert und das am Objekt reflektierte Licht mit einen Detektorarray detektiert wird. Der Sensor 2 weist einen sich quer zu seiner optischen Achse 4 erstreckenden Messbereich 5 auf. Dabei ist die optische Achse 4 die Symmetrieachse der projizierenden Laserstrahlen und der Messbereich der mögliche Versatz der einzelnen die Laserlinie bildenden Laserstrahlen. Als Begrenzung des Messbereichs 5 sind die beiden Randstrahlen 6 und 7 des Linienlaserprojektors in die Fig. eingezeichnet. Zusätzlich zeigt die Fig. einen weiteren Lichtstrahl 8, der zwischen den beiden Randstrahlen 6, 7 angeordnet ist und der in derselben Ebene liegt wie die optische Achse 4 bzw. in der Darstellung der Fig. 1 sogar mit der optischen Achse 4 zusammenfällt.

Der Messbereich 5 wird durch einen Spiegel 9, der durch zwei dachartig angeordnete plane Spiegelflächen gebildet wird, in zwei gleich große divergierende Bereiche 10 und 11 aufgespaltet. Lichtstrahl 8 fällt auf die Kante des Spiegels 9, an der die beiden Spiegelflächen des Spiegels 9 aneinander stoßen.

In Abhängigkeit von der gewünschten Abweichung der Beobachtungsrichtungen voneinander befinden sich in gewissem Abstand zu Spiegel 9 weitere Spiegel im Strahlengang, die die Bereiche 10, 11 wieder in Richtung der optischen Achse 4 reflektieren: Der Bereich 10 wird durch eine plane Spiegelfläche 12, der Bereich 11 durch eine plane Spiegelfläche 13 in Richtung optischer Achse 4 reflektiert. Die beiden an den Spiegelflächen 12 und 13 reflektierten Bereiche 14 und 15 schneiden sich durch die Anordnung der Spiegelflächen in einem Messfeld 16. In diesem Messfeld 16 kann die dreidimensional ausgedehnte Struktur vermessen werden. Die in der Fig. nicht eingezeichnete Struktur wird im Allgemeinen schräg und/oder senkrecht zur Zeichenebene verlaufen.

Die Spiegel 9, 12, 13 der Spiegelanordnung 3 sind dabei derart angeordnet, dass die optische Achse 4 nicht nur Symmetrieachse der die Laserlinie erzeugenden Laserstrahlen, sondern auch Symmetrieachse der Spiegelanordnung 3 ist. Zudem verlaufen die einzelnen Lichtstrahlen vom Sensor 2 zum Messbereich 16 durch die besondere Anordnung der Spiegel 9, 12, 13 in einer Ebene. Es sei jedoch angemerkt, dass dies nicht zwangsläufig gegeben sein muss. So kann es wünschenswert sein, dass die durch die Bereiche 14, 15 erzeugten Linien nicht exakt aufeinander fallen, beispielsweise zur Vermeidung gegenseitiger Einstreuungen von Licht aus dem jeweils anderen Bereich. In diesem Fall würde durch leichtes Verdrehen der Spiegel ein Versatz der Linien erreicht werden.

In dem Messfeld 16 befindet sich die hier nicht eingezeichnete dreidimensional ausgedehnte Struktur, an der die durch den Linienlaserprojektor erzeugte und durch die Spiegelanordnung aufgeteilte Linie reflektiert wird. Die Lichtstrahlen werden durch die Spiegel 9, 12, 13 der Spiegelanordnung wieder zum Sensor 2 zurückgeführt und treffen dort in einen ebenfalls nicht eingezeichneten Detektor. Da die die Struktur beleuchtende Linie durch einen einzelnen Laserstrahl mittels einer Umlenkvorrichtung beschrieben wird, können im Detektorbild die betreffenden Bestandteile wieder getrennt werden.

Die von dem Sensor kommenden Signale werden anschließend digitalisiert und einer Signalverarbeitung zugeführt. Dort können Rauschen unterdrückt, die Trennlinien zwischen der beiden Bereichen des Messbereichs bestimmt, eine Triangulation durchgeführt, ein Gesamtprofil der Struktur berechnet und/oder weitere Informationen über die Struktur extrahiert werden. Die einzelnen extrahierten Informationen können dem Nutzer der Messvorrichtung geeignet dargestellt werden. Eine Anzeigevorrichtung kann beispielsweise das Profil der Struktur darstellen. Alternativ oder zusätzlich können Informationen ausgegeben werden, ob beispielsweise zwei Flächen eines Objekts über eine ausreichende Bündigkeit verfügen.

Da ein Linientriangulator prinzipbedingt lediglich zweidimensionale Informationen liefert, kann die Messanordnung relativ zur Struktur bewegt werden. Auch eine Bewegung der Struktur relativ zur Messanordnung ist möglich. Es könnte jedoch auch eine weitere Umlenkvorrichtung vorgesehen sein, die die auf die Struktur projizierte Laserlinie in Richtungen quer zur Laserlinie bewegt.

Abschließend sei ausdrücklich darauf hingewiesen, dass das voranstehend beschriebene Ausführungsbeispiel lediglich der Erörterung der durch die Ansprüche definierten Lehre dient.

### Bezugszeichenliste

- 1: Messanordnung
- 2: Sensor
- 3: Spiegelanordnung
- 4: optische Achse
- 5: Messbereich (des Sensors)
- 6: Randstrahl des Messbereichs
- 7: Randstrahl des Messbereichs
- 8: mittlerer Strahl des Messbereichs
- 9: Spiegel
- 10: divergierender Bereich
- 11: divergierender Bereich
- 12: Spiegel
- 13: Spiegel
- 14: reflektierter Bereich
- 15: reflektierter Bereich
- 16: Messfeld

## Patentansprüche

1. Messanordnung (1) zum Vermessen einer dreidimensional ausgedehnten Struktur mittels eines optischen Sensors (2), wobei der Sensor (2) einen sich quer zur optischen Achse (4) erstreckenden Messbereich (5) aufweist, wobei
die Messanordnung (1) eine Spiegelanordnung (3) mit mehreren Spiegeln (9, 12, 13) umfasst, die den Messbereich (5) des Sensors (2) zunächst über einen oder mehrere Spiegel (9) in mindestens zwei divergierende Bereiche (10, 11) aufteilt und die die divergierenden Bereiche (10, 11) über einen oder mehrere weitere Spiegel (12, 13) wieder derart zusammenführt, dass sich die Bereiche (14, 15) in einem Messfeld (16) schneiden, wobei in dem Messfeld (16) eine Vermessung der dreidimensional ausgedehnten Struktur gleichzeitig aus verschiedenen Richtungen erfolgt, und wobei dass die Messanordnung (1) eine Releuchtungseinrichtung umfasst, **dadurch gekennzeichnet, daß** die Lichtstrahlen vom Sensor (2) zur Struktur und von der Struktur wieder zurück zum Sensor (2) durch die gemeinsame Spiegelanordnung (3) gelenkt werden.

2. Messanordnung nach Anspruch 1, **dadurch gekennzeichnet, dass** der/die Spiegel (9) derart angeordnet ist/sind, dass der Messbereich (5) des Sensors (2) in zwei Bereiche (10, 11) geteilt wird, wobei die beiden Bereiche (10, 11) vorzugsweise gleich groß sind.

3. Messanordnung nach Anspruch 1 oder 2, **dadurch gekennzeichnet, dass** der Sensor (2) einen Abstandssensor umfasst und/oder
dass in dem Messfeld (16) eine Vermessung mittels Triangulation erfolgt und/oder
dass der Sensor (2) nach den Linienschnittverfahren arbeitet.

4. Messanordnung nach einem der Ansprüche 1 bis 3, **dadurch gekennzeichnet, dass** dem Sensor (2) eine telezentrische Optik zugeordnet ist und/oder
dass der Sensor (2) einen optoelektrischen Detektor umfasst, wobei
der Detektor als Linien- oder Matrixdetektor ausgestaltet ist.

5. Messanordnung nach einem der Ansprüche 1 bis 4, **dadurch gekennzeichnet, dass** zur Erzeugung oder Vergrößerung des Messbereichs (5) quer zur optischen Achse (4) des Sensors (2) eine Umlenkvorrichtung vorgesehen ist und/oder der Sensor (2) quer zur optischen Achse (4) bewegbar ist.

6. Messanordnung nach einem der Ansprüche 1 bis 5, **dadurch gekennzeichnet, dass** die Spiegel (9, 12, 13) plan oder als Ausschnitt einer Kugel, eines Zylinders, eines Ellipsoiden oder eines Hyperboloiden ausgebildet sind und/oder
dass einer oder mehrere der Spiegel (9, 12, 13) der Spiegelanordnung (3) bewegbar und/oder drehbar ausgestaltet sind, wobei
die Position und die Lage der Spiegel (9, 12, 13) der Spiegelanordnung (3), vorzugsweise in Abhängigkeit der zu erfassenden Struktur, einstellbar sind und/oder wobei
die Bewegung des/der Spiegel (9, 12, 13) durch eine Steuereinheit steuerbar ist.

7. Messanordnung nach einem der Ansprüche 1 bis 6, **dadurch gekennzeichnet, dass** eine Signalverarbeitung vorgesehen ist, die aus den durch den Sensor (2) gewonnenen Bildinformationen die aufgeteilten Bereiche (10, 11) des Messbereichs (5) extrahiert und/oder Informationen über die dreidimensional ausgedehnte Struktur aus den durch den Sensor (2) gewonnenen Informationen gewinnt.

8. Verfahren zum Vermessen einer dreidimensional ausgedehnten Struktur mittels einer Messanordnung, insbesondere einer Messanordnung nach einem der Ansprüche 1 bis 7, wobei die Messanordnung (1) einen optischen Sensor (2) mit einen sich quer zur optischen Achse (4) erstreckenden Messbereich (5) ausweist,
wobei mittels eines oder mehrerer Spiegel (9) einer Spiegelanordnung (3) der Messbereich (5) des Sensors (2) zunächst in mindestens zwei divergierende Bereiche (10, 11) aufgeteilt wird und die divergierenden Bereiche (10, 11) über einen oder mehrere weitere Spiegel (12, 13) der Spiegelanordnung (3) wieder derart zusammengeführt werden, dass sich die Bereiche (14, 15) in einem Messfeld (16) schneiden, wodurch in dem Messfeld (16) eine Vermessung der dreidimensional ausgedehnten Struktur gleichzeitig aus verschiedenen Richtungen ermöglicht wird, **dadurch gekennzeichnet dass** die Lichtstrahlen von einer Beleuchtungseinrichtung des Sensors (2) zur Struktur und von der Structure wieder zurück zum Sensor (2) durch die gemeinsame Spiegelanordnung (3) gelenkt werden.

9. Verfahren nach Anspruch 8, **dadurch gekennzeichnet, dass** durch den Sensor (2) gewonnene Bildinformationen digitalisiert werden.

10. Verfahren nach Anspruch 8 oder 9, **dadurch gekennzeichnet, dass** durch den Sensor (2) gewonnene Bildinformationen in einer Verarbeitungseinheit einer Signalverarbeitung unterzogen werden, wobei
durch die Signalverarbeitung die aufgeteilten Bereiche (10, 11) des Messbereichs (5) aus den Bildinformationen extrahiert werden und/oder wobei
durch die Signalverarbeitung das Profil der dreidimensional ausgedehnten Struktur rekonstruiert wird.

## Claims

1. Measuring assembly (1) for measuring a three-dimensionally extended structure by means of an optical sensor (2), wherein the sensor (2) has a measuring region (5) extending transversely to the optical axis (4), wherein the measuring assembly (1) comprises a mirror arrangement (3) with multiple mirrors (9, 12, 13) which divides the measuring region (5) of the sensor (2) initially via one or more mirrors (9) into at least two diverging regions (10, 11) and which reunites the diverging regions (10, 11) via one or more further mirrors (12, 13) in such a manner that the regions (14, 15) intersect in a measuring field (16), wherein a measurement of the three-dimensionally extended structure is effected simultaneously from different directions in the measuring field (16), and wherein the measuring assembly (1) comprises an illuminating device, **characterised in that** the light rays are directed from the sensor (2) to the structure and from the structure back again to the sensor (2) by the common mirror arrangement (3).

2. Measuring assembly according to claim 1, **characterised in that** the mirror/mirrors (9) is/are so arranged that the measuring region (5) of the sensor (2) is divided into two regions (10, 11), wherein the two regions (10, 11) are preferably of equal size.

3. Measuring assembly according to claim 1 or 2, **characterised in that** the sensor (2) comprises a distance sensor and/or **in that** a measurement is effected by means of triangulation in the measuring field (16) and/or **in that** the sensor (2) operates according to the linear intercept method.

4. Measuring assembly according to any one of claims 1 to 3, **characterised in that** a telecentric lens is assigned to the sensor (2) and/or **in that** the sensor (2) comprises an optoelectronic detector, wherein the detector is designed as a line detector or matrix detector.

5. Measuring assembly according to any one of claims 1 to 4, **characterised in that** a deflecting device is provided in order to produce or enlarge the measuring region (5) transversely to the optical axis (4) of the sensor (2) and/or the sensor (2) is movable transversely to the optical axis (4).

6. Measuring assembly according to any one of claims 1 to 5, **characterised in that** the mirrors (9, 12, 13) are plane mirrors or in the form of a sector of a sphere, a cylinder, an ellipsoid or a hyperboloid and/or **in that** one or more of the mirrors (9, 12, 13) of the mirror arrangement (3) is designed to be movable and/or rotatable, wherein the position and the orientation of the mirrors (9, 12, 13) of the mirror arrangement (3) are preferably adjustable according to the structure to be detected and/or wherein the movement of the mirror/mirrors (9, 12, 13) is controllable by a control unit.

7. Measuring assembly according to any one of claims 1 to 6, **characterised in that** a signal processing is provided, which from the image information obtained by the sensor (2) extracts the divided regions (10, 11) of the measuring region and/or obtains information about the three-dimensionally extended structure from the information obtained by the sensor (2).

8. Method for measuring a three-dimensionally extended structure by means of a measuring assembly, in particular a measuring assembly according to any one of claims 1 to 7, wherein the measuring assembly (1) has an optical sensor (2) with a measuring region (5) extending transversely to the optical axis (4), wherein by means of one or more mirrors (9) of a mirror arrangement (3) the measuring region (5) of the sensor (2) is divided initially into at least two diverging regions (10, 11) and the diverging regions (10, 11) are reunited via one or more further mirrors (12, 13) of the mirror arrangement (3) in such a manner that the regions (14, 15) intersect in a measuring field (16), enabling a measurement of the three-dimensionally extended structure to be effected simultaneously from different directions in the measuring field (16), **characterised in that** the light rays from an illuminating device of the sensor (2) are directed to the structure and from the structure back again to the sensor (2) by the common mirror arrangement (3).

9. Method according to claim 8, **characterised in that** image information obtained by the sensor (2) is digitized.

10. Method according to claim 8 or 9, **characterised in that** image information obtained by the sensor (2) is subjected in a processing unit to signal processing, wherein the divided regions (10, 11) of the measuring region (5) are extracted by the signal processing from the image information and/or wherein the profile of the three-dimensionally extended structure is reconstructed by the signal processing.

## Revendications

1. Agencement de mesure (1) pour la mesure d'une structure étendue tridimensionnellement au moyen d'un capteur optique (2), le capteur (2) présentant une zone de mesure (5) qui s'étend perpendiculairement à l'axe optique (4), l'agencement de mesure (1) comprenant un agencement de miroirs (3) qui comprend plusieurs miroirs (9, 12, 13), qui partage tout d'abord par un ou plusieurs miroirs (9) la zone de mesure (5) du capteur (2) en au moins deux zones divergentes (10, 11) et qui réunit de nouveau les zones divergentes (10, 11) par un ou plusieurs miroirs supplémentaires (12, 13), de manière à ce que les zones (14, 15) convergent dans un champ de mesure (16), une mesure de la structure étendue tridimensionnellement ayant lieu dans le champ de mesure (16) simultanément à partir de différentes directions, et l'agencement de mesure (1) comprenant un dispositif d'éclairage, **caractérisé en ce que** les rayons de lumière sont dirigés par l'agencement de miroirs collectif (3) du capteur (2) vers la structure et en retour de nouveau de la structure vers le capteur (2).

2. Agencement de mesure selon la revendication 1, **caractérisé en ce que** le ou les miroirs (9) sont agencés de manière à ce que la zone de mesure (5) du capteur (2) soit partagée en deux zones (10, 11), les deux zones (10, 11) étant de préférence de taille identique.

3. Agencement de mesure selon la revendication 1 ou 2, **caractérisé en ce que** le capteur (2) comprend un capteur de distance et/ou en ce qu'une mesure a lieu par triangulation dans le champ de mesure (16) et/ou
**en ce que** le capteur (2) fonctionne selon le procédé par intersection.

4. Agencement de mesure selon l'une quelconque des revendications 1 à 3, **caractérisé en ce qu'**une optique télécentrique est attribuée au capteur (2) et/ou
**en ce que** le capteur (2) comprend un détecteur optoélectrique,
le détecteur étant configuré sous la forme d'un détecteur de ligne ou de matrice.

5. Agencement de mesure selon l'une quelconque des revendications 1 à 4, **caractérisé en ce qu'**un dispositif de déviation est prévu pour former ou agrandir la zone de mesure (5) perpendiculairement à l'axe optique (4) du capteur (2) et/ou le capteur (2) peut être déplacé perpendiculairement à l'axe optique (4).

6. Agencement de mesure selon l'une quelconque des revendications 1 à 5, **caractérisé en ce que** les miroirs (9, 12, 13) sont configurés sous forme plane ou sous la forme d'une coupe d'une sphère, d'un cylindre, d'un ellipsoïde ou d'un hyperboloïde, et/ou
**en ce qu'**un ou plusieurs des miroirs (9, 12, 13) de l'agencement de miroirs (3) sont configurés de manière mobile et/ou rotative,
la position et l'état des miroirs (9, 12, 13) de l'agencement de miroirs (3) étant de préférence ajustables en fonction de la structure à mesurer, et/ou le mouvement du/des miroirs (9, 12, 13) étant commandable par une unité de commande.

7. Agencement de mesure selon l'une quelconque des revendications 1 à 6, **caractérisé en ce qu'**un traitement de signal est prévu, qui extrait les zones partagées (10, 11) de la zone de mesure (5) à partir des informations d'image obtenues par le capteur (2) et/ou obtient des informations sur la structure étendue tridimensionnellement à partir des informations obtenues par le capteur (2).

8. Procédé de mesure d'une structure étendue tridimensionnellement au moyen d'un agencement de mesure, notamment d'un agencement de mesure selon l'une quelconque des revendications 1 à 7, l'agencement de mesure (1) comprenant un capteur optique (2) qui présente une zone de mesure (5) qui s'étend perpendiculairement à l'axe optique (4), la zone de mesure (5) du capteur (2) étant tout d'abord partagée par un ou plusieurs miroirs (9) d'un agencement de miroirs (3) en au moins deux zones divergentes (10, 11) et les zones divergentes (10, 11) étant de nouveau réunies par un ou plusieurs miroirs supplémentaires (12, 13) de l'agencement de miroirs (3), de manière à ce que les zones (14, 15) convergent dans un champ de mesure (16), une mesure de la structure étendue tridimensionnellement pouvant ainsi avoir lieu dans le champ de mesure (16) simultanément à partir de différentes directions, **caractérisé en ce que** les rayons de lumière d'un dispositif d'éclairage du capteur (2) sont dirigés par l'agencement de miroirs collectif (3) vers la structure et en retour de nouveau de la structure vers le capteur (2).

9. Procédé selon la revendication 8, **caractérisé en ce que** les informations d'image obtenues par le capteur (2) sont numérisées.

10. Procédé selon la revendication 8 ou 9, **caractérisé en ce que** les informations d'image obtenues par le capteur (2) sont soumises à un traitement de signal dans une unité de traitement,
les zones partagées (10, 11) de la zone de mesure (5) étant extraites à partir des informations d'image par le traitement de signal et/ou le profil de la structure étendue tridimensionnellement étant reconstruit par le traitement de signal.
